# DEMANDE DE BREVET EUROPEEN

(11) **EP 1 454 691 A1**
(43) Date de publication de la demande: **08.09.2004**
(21) Numéro de dépôt: 03405145.8
(22) Date de dépôt: 04.03.2003
(51) Int. Cl.: B23B 31/18, B25B 5/08, B25B 9/02, H01L 21/00, G04D 1/00, F16C 11/12

(54) **Dispositif de serrage muni d'articulations élastiques**

(71) Demandeur: Willemin Machines S.A., 2854 Bassecourt (CH)
(72) Inventeur: Jeannerat, Denis, 2854 Bassecourt (CH)
(74) Mandataire: Ganguillet, Cyril

(57) **Abrégé**

Le bloc d'articulation (9) est usiné par électroérosion au fil à partir d'une pièce massive dont se détachent les branches latérales (18, 19), reliées à la partie centrale (8) par les deux paires de lamelles élastiques (20, 21 et 22, 23). La plaque de posage (34) et les griffes (32, 33) fixées sur la partie centrale (8) et sur les rebords supérieurs des branches (18, 19) complètent les mâchoires (3 et 4) et le socle (1) du dispositif qui peut fixer l'ébauche de platine (6) et la présenter devant une machine d'usinage. L'embase (2) guide un poussoir commandant l'ouverture des mâchoires (3 et 4).

## Description

La présente invention a pour objet un dispositif de fixation par serrage d'une ébauche de pièce à usiner sur un socle qui présente une surface de support conformée pour recevoir une face de ladite ébauche.

Dans les machines d'usinage, on utilise des dispositifs de fixation par serrage de différentes sortes afin de fixer les ébauches à usiner. Il est essentiel que la fixation intervienne de façon sure et précise, et que les opérations de fixation et de libération puissent être effectuées rapidement, le cas échéant être commandées automatiquement, le dispositif lui-même étant d'une conception simple et aussi peu coûteuse que possible.

La présente invention vise à réaliser un dispositif du genre mentionné qui satisfasse à ces exigences mieux que jusqu'à maintenant, notamment pour la fixation de certaines ébauches de formes particulières.

Dans ce but, la présente invention propose un dispositif de fixation par serrage d'une ébauche de pièce à usiner sur un socle qui présente une surface de support conformée pour recevoir une face de ladite ébauche, caractérisé en ce que le serrage est réalisé au moyen de deux mâchoires reliées au socle par des systèmes à quatre articulations élastiques, l'ouverture et la fermeture des mâchoires étant commandées par un poussoir guidé dans le socle.

De préférence, les systèmes à quatre articulations sont conçus de façon qu'en position de serrage les mâchoires appuient sur deux bords opposés de l'ébauche et que, sous l'action du poussoir, elles s'écartent de l'ébauche selon deux trajectoires incurvées déterminées par la géométrie des systèmes à quatre articulations.

De préférence, également, les systèmes à quatre articulations et la partie centrale du socle constituent un bloc d'articulation usiné dans la masse d'une pièce massive.

Selon un mode d'exécution, la dite pièce massive a la forme générale d'un parallélépipède rectangle avec une partie centrale présentant une face supérieure, deux branches latérales s'étendant en regard de deux faces latérales opposées de la partie centrale, et deux paires de lamelles élastiques reliant les bases des branches aux extrémités supérieure et inférieure desdites faces latérales de la partie centrale.

On décrit ci-après une forme d'exécution de l'objet de l'invention, donnée à titre d'exemple, en se référant au dessin annexé et sur lequel:
- la figure 1 est une vue en perspective de l'ensemble du dispositif;
- la figure 2 est une vue en coupe selon un plan passant par l'axe du dispositif; et
- la figure 3 est une vue schématique montrant la géométrie d'un système à quatre articulations et le mouvement de la mâchoire correspondante.

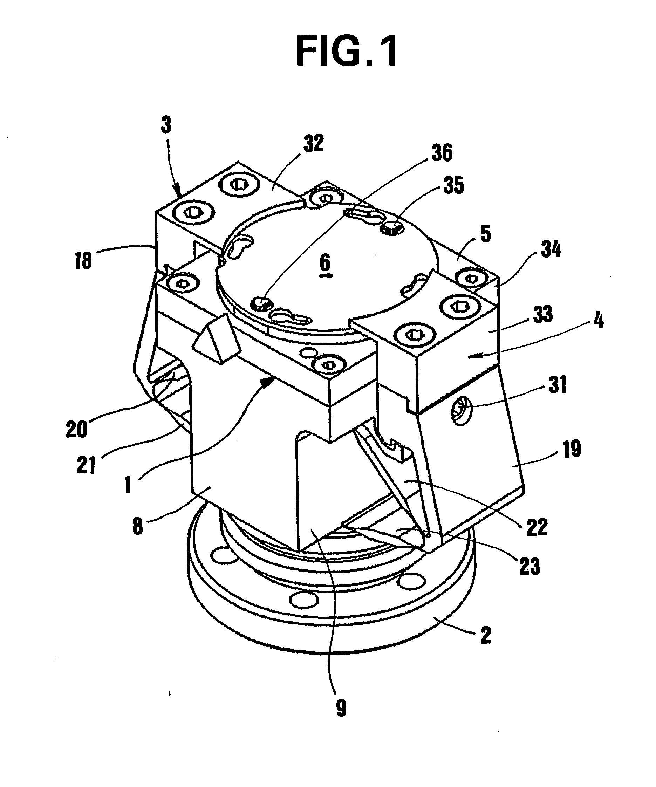

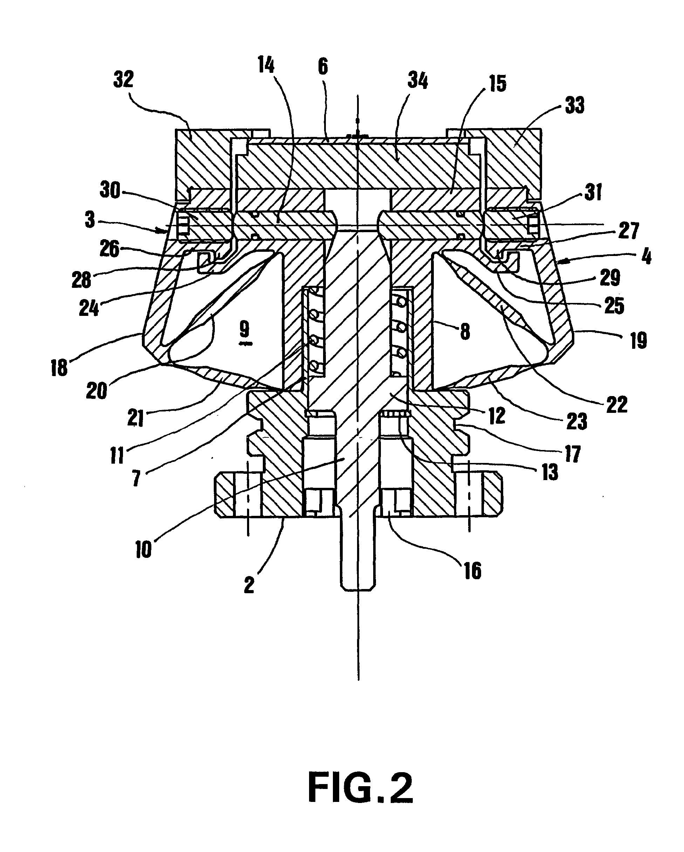

Le dispositif des figures 1 et 2 est destiné à être incorporé, par exemple, à un dispositif d'alimentation d'une fraiseuse et à recevoir des ébauches de pièces planes, de faible épaisseur, comme par exemple des platines de pièces d'horlogerie. Le dispositif d'alimentation peut comprendre un bras double symétrique rigide capable de tourner autour d'un axe central perpendiculaire au bras. Deux dispositifs de fixation tels que décrits ci-après sont montés sur des interfaces à serrage rapide et peuvent être interchangés au moyen du dit bras tournant, de sorte qu'une platine est chargée pendant que l'autre est usinée.

Le dispositif lui-même est formé de trois parties principales : un socle 1, muni à sa partie supérieure d'une plaque de travail 34 et à sa base d'une embase circulaire 2 qui sera montée sur une interface rapide du commerce, et deux mâchoires 3 et 4 reliées élastiquement au socle et s'engageant en position de serrage au-dessus d'une surface de support 5 du socle 1, de façon à fixer et maintenir sur cette surface une ébauche à usiner 6. Cette ébauche est une pièce qui peut être plus ou moins mince, de forme circulaire, ovale ou polygonale, la forme de la surface supérieure d'appui et des mâchoires étant adaptée de cas en cas comme on le verra plus loin.

A la figure 2, les parties principales, soit le socle 1 et les mâchoires 3 et 4, sont représentées en détail. L'embase circulaire 2 du socle 1 est une pièce de forme générale cylindrique avec un manchon 7 à son extrémité supérieure, chassé dans un logement cylindrique formé au revers d'une partie centrale 8 d'un bloc d'articulation 9. Un poussoir 10 est monté dans l'âme de l'embase 2. Un ressort 11 s'appuyant à une extrémité dans le fond du logement de la partie centrale 8 et à l'autre extrémité sur une collerette 12 du poussoir 10 maintient normalement ce dernier en position rétractée avec sa collerette 12 pressée contre une bague d'arrêt élastique 13 clipsée dans une rainure de l'entrée du manchon 7. On voit qu'en se déplaçant vers le haut à la figure 2, le poussoir 10 écarte l'une de l'autre deux goupilles 14 et 15 guidées dans des alésages diamétralement opposés de ladite partie centrale 8 du bloc d'articulation 9. Ce mouvement se fait contre l'action du ressort 11. L'extrémité inférieure (voir figure 2) du poussoir 10 est guidée dans un palier de guidage et fait saillie vers le bas, de façon à pouvoir être accessible pour un organe de commande, par exemple automatique. L'embase 2 comporte une rainure circulaire 17 constituant une gorge de préhension pour le dispositif d'alimentation à bras tournant.

La partie supérieure du socle 1 comporte les mâchoires 3 et 4 et, notamment, le bloc d'articulation 9. Ce dernier est formé à partir d'une pièce brute massive en forme de parallélépipède rectangle. Le métal de cette pièce sera choisi en fonction des techniques d'usinage particulières utilisées pour aboutir au bloc 9. En effet, comme on le verra plus loin, les différentes parties du bloc 9 remplissent des fonctions différentes et doivent dans ce but présenter des caractéristiques métallurgiques appropriées. L'alésage central, destiné à l'engagement du manchon 7 et de la partie supérieure du poussoir 10, ainsi que les alésages latéraux pour les goupilles 14 et 15 et des butées réglables décrites plus loin, seront usinées par des moyens conventionnels, alors que les éléments décrits ci-après, formant des branches latérales 18, 19 appartenant aux mâchoires 3 et 4, des lamelles élastiques 20, 21 ainsi que 22, 23 et des ergots 24 et 25, sont usinés dans la masse par la technique de l'électroérosion au fil. On remarque que les éléments de structure mentionnés en dernier lieu, et que l'on va décrire, sont tous limités par des surfaces réglées dont les directrices sont parallèles et traversent la pièce massive de départ d'une face à l'autre, disposition qui facilite l'emploi de la technique de l'électroérosion au fil. Les branches latérales 18 et 19 sont légèrement inclinées vers le haut en direction de l'axe central du socle. Elles ne sont reliées à la partie centrale 8 du bloc d'articulation que par les deux paires de lamelles élastiques 20, 21 et 22, 23. Chaque paire de lamelles part de l'arête inférieure de l'une des branches 18 ou 19 et s'étend vers une des faces planes latérales de la partie centrale 8, les lamelles 20 et 22 étant reliées à l'arête interne supérieure de ladite partie centrale, tandis que les lamelles 21 et 23 atteignent le bord inférieur de cette partie centrale. Les profils des lamelles sont étudiés de manière à présenter, aux endroits voulus, une élasticité suffisante pour assurer le fonctionnement des systèmes à quatre articulations contrôlant les déplacements des mâchoires.

Le haut des branches latérales 18 et 19 est libre, mais pour éviter des déformations exagérées ou intempestives, ces branches sont formées avec des rebords internes 26, 27 munis de crans 28, 29, et la partie centrale 8 du bloc d'articulation 9 présente des ergots 24, 25 relevés à leurs bords extérieurs de manière à être engagés avec un jeu calculé dans les crans 28 et 29. Les rebords internes 26 et 27 présentent enfin des forures taraudées équipées de butées filetées 30 et 31. Celles-ci sont réglables et coopèrent avec les goupilles 14 et 15, de sorte que, lorsque le poussoir 10 est déplacé vers le haut, les goupilles 14 et 15 écartent les branches 18, 19 l'une de l'autre en faisant fléchir les parties élastiques des lamelles 20 à 23.

Pour compléter les mâchoires 3, 4 et le socle 1, le bloc d'articulation 9 est encore équipé de griffes 32, 33 et d'une plaque de posage 34 fixées comme on le voit à la figure 2 sur les rebords 26, 27 des branches 18, 19 et sur la partie centrale 8 du bloc 9, respectivement. Ces éléments auxiliaires amovibles sont adaptés à la forme et aux dimensions de l'ébauche 6 à fixer. Ainsi, par exemple, la plaque de posage 34 pourra présenter des ergots de centrage fixes 35 et 36 correspondant à des trous de positionnement de l'ébauche 6, sa surface supérieure 5 étant par ailleurs adaptée à la structure de l'ébauche 6.

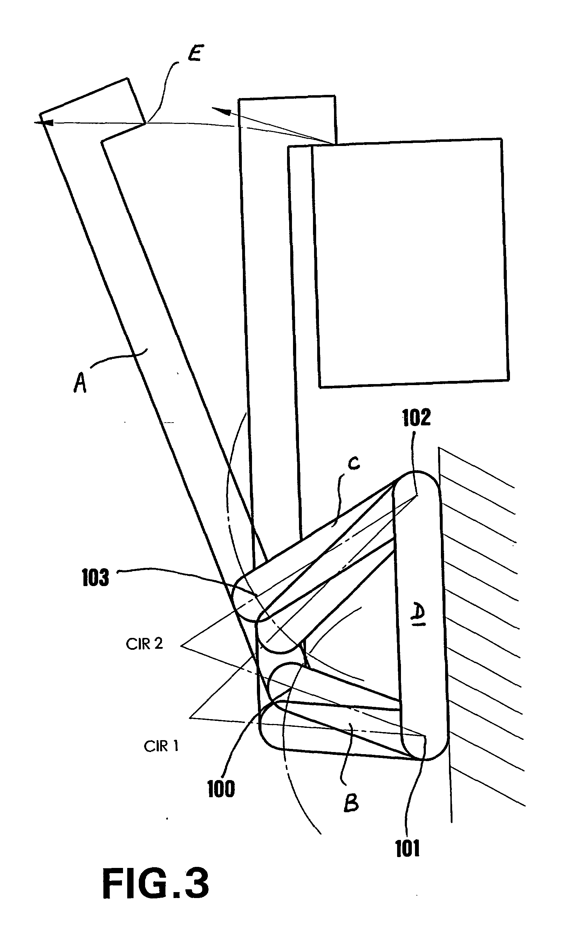

La figure 3 illustre le principe de fonctionnement du dispositif de serrage décrit. Un système à quatre articulations comporte de façon connue en soi quatre éléments rigides A, B, C, D reliés par quatre articulations 100, 101, 102, 103. L'élément D correspond à la partie centrale 8 du socle 1 et l'élément A à la branche 18, par exemple, le point E correspondant à l'arête interne du rebord 32, tandis que les éléments B et C correspondent aux lamelles 21 et 20. On comprend que les points d'articulation 100 à 103 correspondent aux centres virtuels des articulations entre les éléments rigides 8 et 18 et les parties rigides des lamelles 20 et 21. Il résulte de la figure 3 que, par un choix judicieux des longueurs des éléments A à D, la trajectoire du point E lors d'une déformation du système peut être établie selon les besoins. Par exemple, la trajectoire débute comme une tangente au cercle ayant pour centre le point de jonction virtuel des éléments C et B (CIR 1) et se poursuit par une portion tangente au cercle ayant pour centre instantané de rotation le point de jonction virtuel des éléments B et C (CIR 2). Pour un fonctionnement optimal du dispositif de fixation décrit, il est avantageux que cette trajectoire ait une composante importante dans la direction parallèle à l'axe du dispositif et que la composante latérale assurant le dégagement de l'ébauche soit suffisante.

En outre, il est aussi avantageux que les profils des lamelles soient établis de façon qu'une force de bridage largement suffisante s'exerce sur la pièce par l'intermédiaire des mâchoires pendant l'opération d'usinage.

## Revendications

1. Dispositif de fixation par serrage d'une ébauche de pièce à usiner sur un socle qui présente une surface de support conformée pour recevoir une face de ladite ébauche, **caractérisé en ce que** le serrage est réalisé au moyen de deux mâchoires (3, 4) reliées au socle (1) par des systèmes à quatre articulations élastiques (18 à 23), l'ouverture et la fermeture des mâchoires étant commandées par un poussoir (10) guidé dans le socle (1).

2. Dispositif selon la revendication 1, **caractérisé en ce que** les systèmes à quatre articulations (18 à 23) sont conçus de façon qu'en position de serrage les mâchoires appuient sur deux bords opposés de l'ébauche (6) et que, sous l'action du poussoir, elles s'écartent de l'ébauche selon deux trajectoires incurvées déterminées par la géométrie des systèmes à quatre articulations.

3. Dispositif selon la revendication 2, **caractérisé en ce que** les systèmes à quatre articulations (18 à 23) et la partie centrale (8) du socle (1) constituent un bloc d'articulation (9) usiné dans la masse d'une pièce massive.

4. Dispositif selon la revendication 3, **caractérisé en ce que** ladite pièce massive a la forme générale d'un parallélépipède rectangle avec une partie centrale (8) présentant une face supérieure, deux branches latérales (18, 19) s'étendant en regard de deux faces latérales opposées de la partie centrale (8), et deux paires de lamelles élastiques (20, 21 et 22, 23) reliant les bases des branches (18, 19) aux extrémités supérieure et inférieure desdites faces latérales de la partie centrale (8) .

5. Dispositif selon la revendication 4, **caractérisé en ce que** la partie centrale (8) de la pièce massive présente en outre deux ergots latéraux opposés (24, 25) s'étendant depuis les bords supérieurs desdites faces latérales et coopérant avec des crans de retenue (28, 29) formés aux extrémités supérieures des branches (18, 19) pour limiter le déplacement de ces dernières lors des mouvements d'ouverture.

6. Dispositif selon la revendication 5, **caractérisé en ce que** des éléments auxiliaires amovibles de positionnement (34, 32, 33) sont fixés sur la face supérieure de la partie centrale (8) et sur les extrémités supérieures des branches (18, 19) du bloc d'articulation (9) pour former un socle (1) et des mâchoires (3, 4) adaptées à l'ébauche (6) à usiner.

7. Dispositif selon l'une quelconque des revendications 3 à 6, **caractérisé en ce que** ladite pièce massive est usinée par électroérosion au fil.
